Europäisches Patentamt

(19) European Patent Office

Office européen des brevets

(11) Numéro de publication: **0 094 263**
**B1**

(12) **FASCICULE DE BREVET EUROPEEN**

(45) Date de publication du fascicule du brevet:
05.02.86

(51) Int. Cl.⁴: **A 23 C 21/00, A 23 J 3/00**

(21) Numéro de dépôt: **83400602.5**

(22) Date de dépôt: **23.03.83**

(54) Procédé de traitement d'un produit lactosérique et produit protéinique en résultant.

(30) Priorité: **29.04.82 FR 8207402**

(43) Date de publication de la demande:
**16.11.83 Bulletin 83/46**

(45) Mention de la délivrance du brevet:
**05.02.86 Bulletin 86/6**

(84) Etats contractants désignés:
**AT BE CH DE GB IT LI LU NL SE**

(56) Documents cités:
**EP - A - 0 038 732**
**FR - A - 2 198 704**
**FR - A - 2 345 939**

**JOURNAL OF DAIRY SCIENCE, vol. 58, no. 5, 1975, page 782 B.R. BRESLAU et al.: "Production of a crystal clear, bland tasting, protein solution from cheese whey"**

(73) Titulaire: **LAITERIE TRIBALLAT,**
**F-35530 Noyal-Sur-Vilaine (FR)**

(72) Inventeur: **Bolzer, René Jean-Marie, La Croix Rouge,**
**F-35530 Brece (FR)**
Inventeur: **Cianchin, Jean, 2, rue Julien Neveu,**
**F-35530 Noyal-sur-Vilaine (FR)**

(74) Mandataire: **Bourgognon, Jean-Marie et al, Cabinet Flechner 22, Avenue de Friedland, F-75008 Paris (FR)**

LIBER, STOCKHOLM 1986

## Description

La présente invention se rapporte aux procédés de traitement d'un produit lactosérique et aux produits protéiniques en résultant.

Par l'expression produit lactosérique on entend, dans le présent mémoire, principalement du lactosérum ou petit-lait, mais aussi les rétentats de l'ultrafiltration de lactosérum.

La coagulation du lait, qui s'effectue dans les conditions les plus diverses suivant la nature des fromages que l'on souhaite préparer, donne, outre un coagulum caséinique, du lactosérum dont les caractéristiques de composition varient en fonction de nombreux paramètres, tels que l'origine du lait et le traitement qu'il a subi.

Généralement, on sépare le coagulum du lactosérum et on valorise ce dernier en lui faisant subir divers traitements, dont l'ultrafiltration, pour préparer des protéines lactoseriques utiles, notamment comme ingrédients d'aliments diététiques (cf. Journal of Dairy Science, vol 58, n°5, 1975, page 782 B.R.Breslau et Coll.).

Il est souhaitable que le rétentat contienne aussi peu lipides que possible, en particulier quand on souhaite préparer des alimens enrichis en protéines. Pedant l'ultrafiltration, les lipoprotéines s'accumulent et font partie de ce que l'on appelle une membrane dynamique qui abaisse les débits de perméation et rend ensuite le nettoyage des appareils plus difficile. Dans certains cas, il se produit aussi une augmentation néfaste de la viscosite et une baisse du pouvoir moussant et de la stabilité.

Toutes les solutions proposées jusqu'ici pour abaisser la teneur en lipides du lactoserum, telles qu'une microfiltration, une déminéralisation suivie d'un traitement thermique, un chauffage à température élevée, sont onereuses et peu efficaces.

L'invention vise un procédé de traitement du lactosérum, en vue de le délipider et de le débarrasser de microorganismes, simple à mettre en oeuvre et à maitriser et donc tres fiable et qui n'entraîne pas de pertes de matières protéiques avec abaissement du rendement. Le débit instantané d'ultrafiltration est augmente d'au moins 30 % et se maintient dans le temps.

Le procede suivant l'invention consiste ajuster le pH du produit lactosérique dans une plage de pH allant de 4,3 à 5,0 environ, à provoquer au sein de ce lactosérum à pH ajuste une coagulation en le mettant dans les conditions où une matiere lactee caseinique coagule dans cette plage de pH et en lui ajoutant une matiere lactee caseinique avant un pH inferieur à 3,5 environ, puis à séparer le produit coagulé du lactosérum traité.

Alors que, pour obtenir le lactosérum, l'on a effectué auparavant la séparation du coagulum et du lactosérum contenu dans le lait en procedant déjà à une coagulation, l'invention préconise, d'une manière apparemment irrationnelle, d'ajouter une matière lactée caseinioue, donc apte à coaguler, au lactosérum, ce qui semble annuler tout le bénéfixe du traitement antérieur qu'il va falloir recommencer. Mais, en recommençant ce traitement de coagulation dans les conditions déterminées suivant le procédé de l'invention et en présence de la matière lactée caséinique particulière préconisée, on constate, d'une manière surprenante, que le lactosérum séparé dans cette seconde coagulation est délipidé par un phénomène de captation des lipides par la caséine coagulee et est débarrassé d'une partie des microorcanismes.

Le premier stade du procédé suivant l'invention consiste à ajuster le pH du produit lactosérique dans une plage de pH allant de 4,3 à 5,0 environ et de préférence de 4,5 à 4,8.

Cet ajustement peut s'effectuer par ajout d'un acide, notamment chlorhydrique, sulfurique, par acidification par fermentation. Mais de préfépence, on ajuste le pH du produit lactosérique en le mélangeant à du lactosérum décationé au préalable à l'aide d'une résine cationique sous forme H.

On peut mettre le produit lactosérique dans les conditions où une matière lactés caséinique coagule en le chauffant, de préférence entre 40 et 55°C, tandis que la matiere lactée caséinique ajoutée, qui est notamment un lait acide ou une caséinate acide, est de préférence préparée par acidulation au moins en partie sur une résine cationique sous forme H. Ce lait ou caséinate acide a de préférence un pH compris entre 1,8 et 3,4 environ. On a obtenu des résultats intéressants du point de vue de la délipidation en ajoutant seulement 2 % en poids de matière lactée caséinique par rapport au poids du produit lactosérique à délipider. On préfere en ajouter 5 % environ. On peut en ajouter davantage, mais sans obtenir une délipidation meilleure. C'est pourquoi il n'est pas souhaitable économiquement de dépasser une proportion de matiere lactée caséinique de 40 % et mieux de 25 %. On peut procéder à la séparation du produit coagulé et du lactosérum traité par tout moven classique notamment par centrifugation. Le produit coagulé protéinique se révèle avoir une teneur en lipides élevée dépassant 2 à 20 %.

Les exemples suivants illustrent l'invention.

## EXEMPLE 1

Un sérum de fromagerie a un pH de 6,22 et une teneur en matières grasses de 0,35 gramme par litre. On en fait passer 30 parties en volume sur une résine cationique sous forme H pour obtenir un pH de 1,7. On mélange ces 30 parties à 70 parties du serum initial. Le pH est ainsi ajusté à 4,82.

On réchauffe le tout à 48°C et on additionne brutalement de 5 % de lait préalablement acidulé à pH de 1,92 par échange de cation sur résine de forme H. Il se produit une coagulation brutale. On maintient le tout à 45°C pendant 2 minutes, puis on centrifuge. On obtient un précipité blanchàtre dont la teneur en lipide est de 20 % et un liquide limpide translucide qui est le lactosérum délipidé.

2

On ultrafiltre le sérum jusqu'à l'obtention d'un concentré à 65 % de matière sèche. On ajuste le pH à 6,2 et on sèche le concentre.

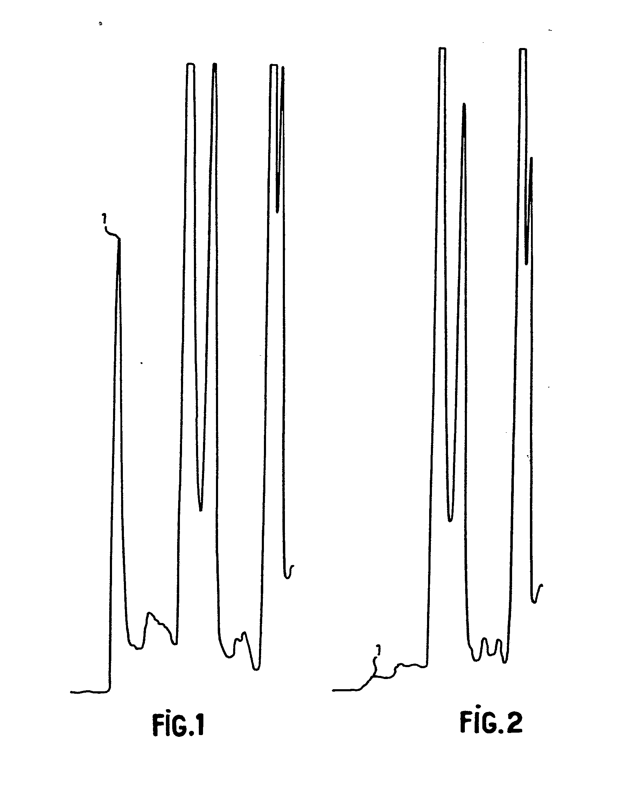

La teneur de la poudre en humidité est de 3,75 % en poids. La teneur en protéines est de 88,9 %. Celle en matières minérales est de 3,10 %, tandis que la teneur en matières grasses n'est que de 0,27 %. Par différence, la teneur en lactose est estimée à 23,98 %. La teneur en lipoprotéine est determinée sur chromatographie en phase liquide haute pression (18 bars) avec tampon tris P correspondant à un pH de 6,8 sur colonne T SK 3000 sur un appareil Varian 5.01o. A la figure 2, le premier pic 1 correspond aux lipoprotéines.

## EXEMPLE COMPARATIF 1

On ultrafiltre directement ls sérum initial de l'exempls 1. Les teneurs de la poudre en humidité, protéines, matières minérales, matières grasses et lactose sont respectivement de 3,80 %, de 68,00 %, de 3,4 %, de 5,9 % et de 18,9 %.

La figure 1 donne le chromatogramme obtenu. Le premier pic 1 correspond aux lipoprotéines.

## EXEMPLE 2

On acidule un rétentat d'ultrafiltration d'un lactosérum de fromagerie contenant 150 grammes de matière sèchs par litre, ayant une teneur en protéines de 55,4 % en poids par rapport à la matiere sèche et ayant un pH de 5,85 par addition d'acide sulfurique dilué jusqu'à ce que le pH soit de 5,00.

A 85 parties en volume de ce rétentat à pH ajusté à 5,0 réchauffé à 45°C, on ajouts 15 parties sn volume de caséinate acide d'un pH de 2. On laisse l'ensemble à 45°C pendant 5 minutes. On centrifuge. On ultrafiltre le rétentat clarifié jusqu'à obtention d'une teneur en protéines de 85 % sn poids rapportée à la matière sèche. On sèche ensuits.

La poudre délipidée obtenue a une teneur pondérale en humidité de 3,56 %, en protéines de 88,14 %, en matières minérales de 2,39 %, en matières grasses de seulsment 0,51 % et en lactose de 7,40 %.

Le culot de la centrifucation a une teneur en lipides de 32 %. Le produit fini séché a des qualités émulsifiantes remarquables.

## EXEMPLE COMPARATIF 2

On ultrafiltre le rétentat initial ds l'exemple 2. La poudre a une teneur pondérale en humidité de 3,80 %, en protéines de 68,00 %, sn matières minéralss de 3,4 %, en matièrss grasses ds 5,9 % et en lactose de 18,9 %.

Des denombrements microbiens montrent une diminution de plus de 75 % du taux de microorganismes présents dans le lactosérum et le rétentat obtenus aux exemples 1 et 2 par rapport au lactosérum et au rétentat initiaux.

**Revendications**

1. procédé de traitement du lactosérum ou de rétentats d'ultrafiltration de celui-ci, en vue notamment de le délipider et de le débarrasser de microorganismes, caractérisé en ce qu'il consiste à ajuster le pH du lactosérum ou de ses rétentats dans une plage de pH allant de 4,3 à 5,0 environ, à provoquer au sein de ce lactosérum ü pH ajusté une coagulation en le chauffant entre 40 et 55°C et sn lui ajoutant au moins 2 % en poids d'un lait acide ou d'un caséinate acide ayant un pH inférieur à 3,5 environ, puis à séparer le produit coagulé du lactosérum traité.

2. Procédé suivant la revendication 1, caractérisé en ce qu'il consiste ü ajuster le pH du lactosérum ou de ses rétentats en le mélangeant à du lactosérum décationé au préalable à l'aide d'une résine cationique sous forme H.

3. procédé suivant la revendication 1 ou 2, caractérisé en ce qu'il consiste à ajouter moins de 40 % et de préférence moins de 25 % en poids de lait acide ou de caséinats acide par rapport au poids du lactosérum.

4. Procédé suivant l'une des revendications précédentes, caractérisé en ce qu'il consiste à utiliser un lait acide ou un caséinate acide ayant un pH inférieur à 3,5 préparé par acidulation au moins en partie sur une résine cationique sous forme H.

5. Produit protéinique d'origine laitiere susceptible d'étre obtenu selon 1,une quelconque des revendications précédentes, caractérisé en ce qu'il a une teneur en lipoprotéines supérieure à 2 % en poids.

3

**Claims:**

1. Process for treating lactcserum or the ultrafiltration residues thereof, particularly in order to free it from lipids and microorganisms, characterised in that it consists in adjusting the pH of the lactoserum or the residues thereof within a pH range from about 4.3 to 5.0, causing coagulation within this pH-adjusted lactoserum by heating it to between 40 and 55°C and adding at least 2 % by weight of an acid milk or an acid caseinate having a pH of less than about 3.5, then separating the coagulated product from the treated lactoserum.

2. Process as claimed in claim 1, characterised in that the pH of the lactoserum or the residues thereof is adjusted by mixing it with lactoserum which has previously been decationised by means of a cationic resin in H form.

3. Process as claimed in claim 1 or 2, characterised in that it consists in adding less than 40 % and preferably less than 25 % by weight of acid milk or acid caseinate relative to the weight of the lactoserum.

4. Process as claimed in one of the preceding claims, characterised in that it consists in using an acid milk or an acid caseinate having a pH of less than 3.5 prepared by acidulation at least partly on a cationic resin in H form.

5. Protein product of dairy origin capable of being obtained according to any of the preceding claims, characterised in that it has a lipoprotein content of more than 2 % by weight.

**Patentansprüche**

1. Verfahren zum Behandeln von Molke oder deren Ultrafiltrations-Retentaten, um sie insbesondere zu entfetten und sie von Mikroorganismen zu befreien , dadurch gekennzeichnet, dass der pH-Wert der Molke oder ihrer Retentate in einem pH-Bereich von etwa 4,3 bis 5,0 ein gestellt wird, dass ein Koagulieren innerhalb der Molke mit dem eingestellten pH-Wert durch Erhitzen zwischem 40 und 55 °C und unter Zugabe von mindestens 2 Gew.-% saure Milch oder ein saures Kaseinat mit einen pH-Wert von etwa 3,5 bewirkt wird, und dass das koagulierte Produkt von der behandelten Molke getrennt wird

2. Verfahren nach Anspruch 1, dadurch dekennzeichnet, dass das Einstellen des pH-Werts der Molke oder ihrer Retentate dadurch erfolgt, dass ihr vorab mit Hilfe eines H-Form aufweisenden basischen Harzes im pHWert herabgesetzte Molke zugemischt wird.

3. Verfahren nach Anspruch 1 oder 2, dadurch gekennzeichnet, dass weniger als 40 Gew.-%, vorzugsweise weniger als 25 Gew.-%, saurer Milch oder sauren Kaseinats, bezogen auf Molkegewicht, zugesetzt werden.

4. Verfahren nach einem der vorhergehendem Ansprüche, dadurch gekennzeichnet, dass eine saure Milch oder ein saures Kaseinat mit einem pH-Wert unterhalb von 3,5 verwendet wird, das durch Ansäuerung mindestens teilweise über einem basischen Harz mit H-Form hergestellt wurde.

5. Auf Milchbasis hergestelltas Proteinprodukt, hergestellt nach irgendeinem der vorhergehenden Ansprüche, proteinen von mehr als 2 Gew.-% besitzt.

FIG.1

FIG.2